# EUROPÄISCHE PATENTSCHRIFT

(11) **EP 1 032 856 B1**
(45) Veröffentlichungstag und Bekanntmachung des Hinweises auf die Patenterteilung: **12.12.2001**
(21) Anmeldenummer: 98961112.4
(22) Anmeldetag: 30.10.1998
(51) Int. Cl.: G02B 6/42, H04B 10/24

(54) **OPTISCHES SENDE/EMPFANGSMODUL**
OPTICAL TRANSMITTING/RECEIVING MODULE
MODULE OPTIQUE D'EMISSION/RECEPTION

(30) Priorität: 06.11.1997 DE 19748989
(43) Veröffentlichungstag der Anmeldung: 06.09.2000
(73) Patentinhaber: DaimlerChrysler AG, 70567 Stuttgart (DE)
(72) Erfinder: HEINRICH, Jochen, D-89143 Blaubeuren (DE); ZEEB, Eberhard, D-89081 Ulm (DE); PRESSMAR, Kurt, D-89077 Ulm (DE); RODE, Manfred, D-89250 Senden (DE)
(86) Internationale Anmeldenummer: EP9806883
(87) Internationale Veröffentlichungsnummer: WO9924855

(56) Entgegenhaltungen:
- EP-A- 0 803 757
- WO-A-90/02349
- WO-A-97/36201
- DE-A- 4 230 952
- DE-A- 4 402 166
- US-A- 5 201 018

## Beschreibung

Die Erfindung bezieht sich auf ein optisches Sende/Empfangsmodul nach dem Oberbegriff des Patentanspruchs 1 oder 2.

Die optische Signalübertragung gewinnt aus Gründen der Störsicherheit sowie der Gewichts- und Volumenersparnis zunehmend Bedeutung gegenüber der Signalübertragung über elekrisch leitende Verbindungen. Einen wesentlichen Anteil nehmen hierbei Lichtwellenleiter wie Glasfasern oder Kunststoff-Lichtleitkabel ein. In optischen Datenbussen werden jedoch im Vergleich zu elektrischen Datenbussen immer zusätzliche optische Sende- und Empfangsmodule als elektrisch/optische bzw. optisch/elektrische Wandler benötigt, da die Signalverarbeitung in den Busteilnehmem zur Zeit noch elektrisch erfolgt. Dadurch werden zusätzliche Kosten verursacht sowie Volumen und Gewicht beansprucht. Je nach Bustopologie und Busprotokoll werden in leitungsgebundenen optischen Systemen für die Sende- und Empfangspfade sowohl zwei Lichtwellenleiter (sog. Zweileitertechnik) wie auch ein Lichtwellenleiter (sog. Einleitertechnik) verwendet Vorteil der Einleitertechnik ist, daß eine minimale Anzahl von Leitungen und Steckverbindungen in der physikalischen Busschicht verwendet wird, wobei allerdings im optischen Sende/Empfangsmodul zusätzlich Koppelelemente wie beispielsweise Y-Koppler integriert werden müssen, die zusätzliche Übertragungsverluste verursachen.

Aus der DE 33 15 861 A1 ist ein faseroptischer Koppler zum Anschluß eines Lichtwellenleiters an eine Sende/Empfangs-Endstelle bekannt. Ein Trägermodul für ein Sende- und ein Empfangselement enthält einen Trägerkörper aus optisch transparentem Material. In eine V-förmige Nut des Trägerkörpers ist der Endabschnitt eines Lichtwellenleiters eingesetzt. Die Nut endet in einer teildurchlässigen Schrägfläche, die als Sende/Empfangs-Weiche dient. Im Lichtwellenleiter ankommendes Licht wird durch die teildurchlässige Spiegelfläche durch das Material des Trägerkörpers auf ein Empfangselement geleitet. Von einem Sendeelement emittiertes Licht wird an der Spiegelfläche in den Lichtwellenleiter umgelenkt. Da der Trägerkörper an der Umlenkspiegelfläche teildurchlässig sein muß, ist die Materialauswahl auf transparente Stoffe eingeschränkt. Dabei ist Gesamtkoppelwirkungsgrad als Produkt aus Ein- und Auskoppelwirkungsgrad kleiner als 25%.

Aus der Schrift Hunziker; W. et al.; IEEE Photonics Technology Letters, Vol.7, No.11, November 1995 ist eine Methode zur Häusung eines Halbleiterlaser-Arrays in Silicium in Verbindung mit Lichtleitem beschrieben.

Zudem ist aus der Schrift WO 97 36201 A sowohl ein Sendemodul bekannt, bei dem mittels einer verspiegelten, opaken Trägerplatte Licht von einem Sender in eine Sendefaser umgeleitet wird als auch mittels einer Trägerplatte Licht aus einer Empfangsfaser zu einem Empfänger führt.

Ein wesentlicher Nachteil dabei ist die Verwendung von Silizum als Trägermaterial, das mit relativ aufwendigen Verfahrensschritten strukturiert werden muß. Zudem beschränkt die in der Schrift beschriebene Vorgehensweise bei der Herstellung von Gräben auf die Verwendung von einkristallinem (111)-Silizium und stellt damit eine vergleichsweise aufwendige und damit teure Verfahrensweise, mit eingeschränkter Variationsbreite in der Materialauswahl dar.

Der Erfindung liegt deshalb die Aufgabe zugrunde, ein optisches Sende-/Empfangsmodul anzugeben, das sich durch eine optimierte Anordnung zur Effizienzsteigerung in der Signalverarbeitung und durch eine kompakte Bauweise auszeichnet sowie sich einfach und damit kostengünstig mit großer Variationsbreite in der Materialauswahl gestaltet.

Die Erfindung wird durch die Merkmale des Patentanspruchs 1 oder 2 wiedergegeben. Die weiteren Ansprüche enthalten vorteilhafte Aus- und Weiterbildungen der Erfindung.

Das optische Sende/Empfangsmodul besteht aus einer Trägerplatte, einem Sender, einem Empfänger, optischen Faser(n) und ist für Zweileitertechnik oder Einleitertechnik mit zusätzlichem Y-Koppelelement oder Einleitertechnik ohne zusätzliches Y-Koppelelement einsetzbar. Grundelement dieser Anordnung ist eine Metall- oder Kunststoff Trägerplatte, welche spiegelnd beschichtet und damit opak ist und in die mittels Prägetechnik, beispielsweise V-oder U-förmige oder rechteckige Nuten zur Aufnahme von Mehrmodenwellenleitern, Umlenkspiegeln mit einstellbarer Neigung, Fläche und Oberflächenbeschaffenheit zur Umlenkung des ein- bzw. auszukoppelnden Lichts und Vertiefungen zur Aufnahme der Sender bzw. Empfänger eingeprägt sind. Als opake spiegelnde Schicht auf der Trägerplatte kann beispielsweise eine Goldschicht verwendet werden.
Als optische Sender eignet sich besonders eine oberflächenemittierende Laserdiode mit Vertikalresonator (VCSEL; vertical cavity surface emitting laser) in Verbindung mit einer Photodiode als Empfänger. Die Sende-/Empfangsfasern bestehen aus zylindrischen Mehrmodenlichtwellenleitern aus Glas oder Polymeren mit Kerndurchmesser von mindestens 50µm.

Im Falle der Zweileitertechnik oder Einleitertechnik mit zusätzlichem Y-Koppelelement sind einerseits auf der Trägerplatte zwei getrennte, mittels Prägetechnik in die spiegelnd beschichtete Oberfläche eingebrachte, Nuten zur Aufnahme der Sende- und Empfangsfaser und zwei getrennte Ein- und Auskoppelspiegel eingeprägt und der optische Sender und Empfänger direkt über den Spiegeln in vorgeprägten Vertiefungen angebracht.

Im Falle der Zweileitertechnik oder Einleitertechnik mit zusätzlichem Y-Koppelelement sind andererseits auf der Trägerplatte zwei getrennte, mittels Prägetechnik in die spiegelnd beschichtete Oberfläche eingebrachte, Nuten zur Aufnahme der Sende- und Empfangsfaser und ein gehäuster optischer Sender und Empfänger in vorgeprägten Vertiefungen direkt in Verlängerung der Fasern angebracht.
Desweiteren sind im Falle der Einleitertechnik ohne zusätzliches Koppelelement auf der Trägerplatte eine mittels Prägetechnik in die spiegelnd beschichtete Oberfläche eingebrachte Nut zur Aufnahme der Sende/Empfangsfaser, in Verlängerung dazu ein Einkoppelspiegel, der das Faserende nur teilweise abschattet, in weiterer Verlängerung ein Auskoppelspiegel, der das Faserende vollständig abschattet, eingeprägt und der optische Sender und Empfänger direkt über den Spiegeln in vorgeprägten Vertiefungen angebracht.
Alternativ hierzu sind der optische Sender in einer vorgeprägten Vertiefung direkt darüber angeordnet und in weiterer Verlängerung zur Faser der optische Empfänger direkt hinter dem Einkoppelspiegel in vorgeprägten Vertiefungen angebracht.
Die verwendete Prägetechnik kann auch dann angewandt werden, wenn statt VCSEL- und Photodiodenchips gehäuste Sender und Empfänger Verwendung finden. Auch eine Kombination aus gehäusten und nichtgehäusten Bauelementen ist möglich.

Ein wesentlicher Vorteil der Erfindung und besonders rationell ist, daß durch die Verwendung der Prägetechnik, bei der über einen Prägestempel die gewünschte Struktur in die Oberfläche der Trägerplatte eingeprägt wird, ein kostengünstiger, kompakter Aufbau erzielt wird.

Ein weiterer wesentlicher Vorteil der Erfindung besteht darin, daß auch beispielsweise Koppelelemente mit geringen Einfügeverlusten in die geprägte Trägerplatte des Moduls intergriert werden, so daß kompakte, verlustarme Sende/Empfangsmodule für Datenbusse in Einleitertechnik vorliegen. Durch eine hintereinanderliegende Anordnung von Faser, Sender und Empfänger kann ganz auf zusätzliche Y-Koppelelemente verzichtet werden, indem der Einkoppelspiegel lediglich einen gewissen Teil des Lichts abschattet, das aus der Sende/Empfangs-Faser austritt. Der nicht abgeschattete Anteil wird auf den Detektor gekoppelt. Durch die vorgeschlagene Prägetechnik ist es möglich, die Höhe und den Winkel des Einkoppelspiegels im Hinblick auf maximale Einkopplung des Lichts eines vorgegebenen Senders in eine vorgegebene Faser zu optimieren. Durch Optimierung können Gesamtwirkungsgrade deutlich höher als 25% erreicht werden.

Im folgenden wird die Erfindung anhand von vorteilhaften Ausführungsbeispielen unter Bezugnahme auf schematische Zeichnungen in den Figuren näher erläutert. Es zeigen:
- Fig. 1a: Sende/Empfangsmodul in Zweileitertechnik;
- Fig. 1b: Detailansicht des Sende/Empfangsmodul mit Umlenkspiegeln;
- Fig. 1c: Detailansicht des Sende/Empfangsmodul ohne Umlenkspiegeln;
- Fig. 2a: Sende/Empfangsmodul in Einleitertechnik mit Y-Koppler;
- Fig. 2b: Querschnitt des Sendemoduls mit Umlenkspiegel;
- Fig. 3a: Detailansicht des Sende/Empfangsmodul in Einleitertechnik ohne Koppler mit zwei Umlenkspiegeln;
- Fig. 3b: Querschnitt des Sende/Empfangsmodul in Einleitertechnik ohne Koppler mit einem Umlenkspiegel für den Sender;
- Fig. 3c: Querschnitt des Sende/Empfangsmodul in Einleitertechnik ohne Koppler mit einem Umlenkspiegel für den Sender in gehäuster Ausführung.

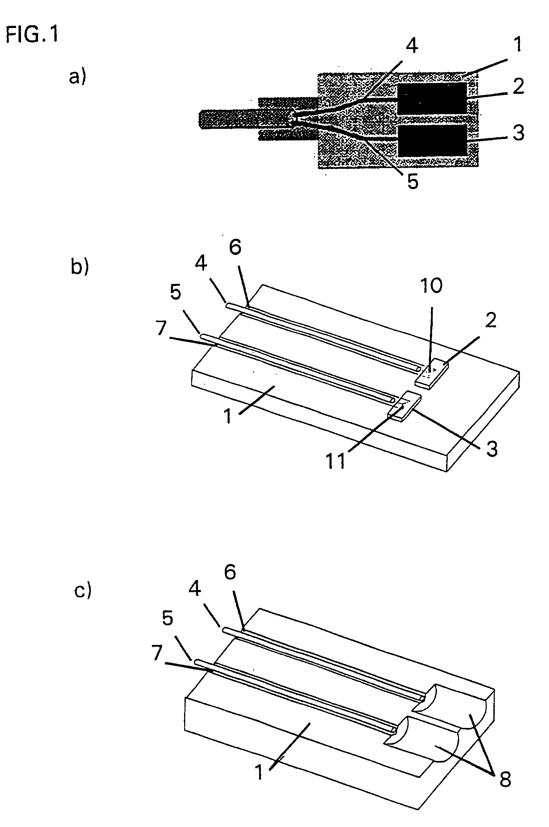

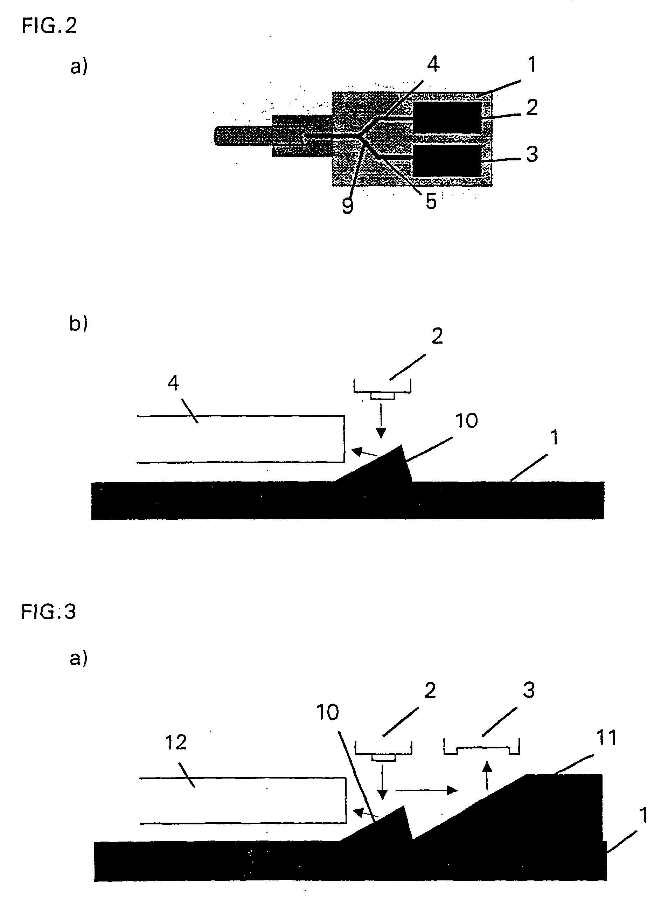

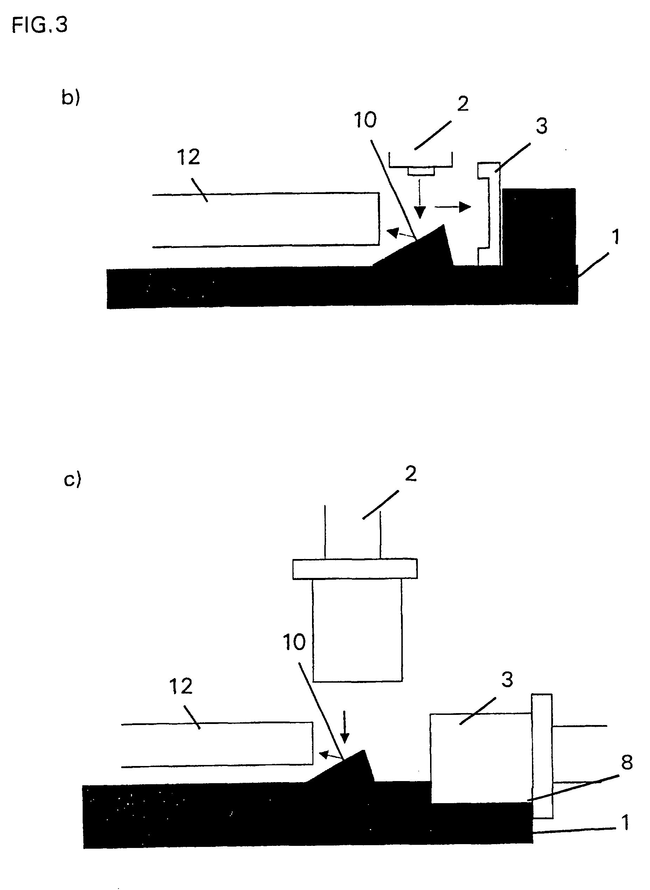

Das in Fig. 1a schematisch dargestellte Sende/Empfangsmodul besteht aus einer Trägerplatte 1, einem optischen Sender 2, einem optischen Empfänger 3 sowie einer Sendefaser 4 und einer Empfangsfaser 5, die beide in eine Führungshülse einmünden (Zweileitertechnik).
In die Trägerplatte 1 (Fig.1b) sind mittels Prägetechnik beispielsweise V-förmige Nuten 6 und 7 zur Aufnahme der Sende- und Empfangsfasern 4 und 5 eingeprägt. Ebenfalls mittels Prägetechnik sind Aufnahmen für den optischen Sender 2 und Empfänger 3 und die Schrägfläche der Ein- bzw. Auskoppelspiegel 10, 11 am Ende der V-förmigen Längsnuten geformt. Sender 2 und Empfänger 3 sind dabei in flip-chip Technik in die Aufnahmen eingefügt und befinden sich jeweils unmittelbar über dem Ein- bzw. Auskoppelspiegel 10, 11. Die Trägerplatte 1 aus Metall und/oder Kunststoff wird von einer opaken, spiegelnden Metallschicht bedeckt, die beispielsweise aus Gold oder, aus Gründen der Haftfestigkeit auf Materialien unterschiedlicher Wärmeausdehnung, aus einer Mehrlagenstruktur wie beispielsweise Kupfer/Gold besteht. Dabei kann die Metallschicht entweder vor dem Prägevorgang oder nachträglich, gegebenenfalls auch nur im Bereich der V-förmigen Nuten 6, 7 und dem Ein- bzw. Auskoppelspiegel 10, 11 aufgebracht werden.
Die Anordnung der Fasern 4, 5, der Umlenkspiegel 10, 11, der Sender 2 und Empfänger 3 sind präzise im Strahlweg positioniert, so daß das im Sender 2 ausgesandte Licht am opaken Auskoppelspiegel 10 reflektiert und in Abhängigkeit von der Modenauswahl unter einem definierten Winkel, in die Sendefaser 4 eingespeist wird; bzw. das in der Empfangsfaser 5 geführte Licht über den opaken Einkoppelspiegel 11 reflektiert und in dem im Strahlengang positionierten Empfänger 3 detekiert wird.
Auf Umlenkspiegel kann auch verzichtet werden, sobald beispielsweise Sender 2 und Empfänger 3 in TO-Gehäuse verwendet werden, die in dafür vorgesehene Aufnahmen 8 in linearer Fortsetzung zu den Faserachsen eingesetzt werden (Fig. 1c).
Das in Fig.2a schematisch dargestellte Sende/Empfangsmodul besteht ebenfalls aus einer Trägerplatte 1, einem optischen Sender 2, einem optischen Empfänger 3 sowie einer Sendefaser 4 und einer Empfangsfaser 5, die jedoch über einen Y-Koppler 9 auf der Trägerplatte 1 zusammengeführt wird, so daß im weiteren Verlauf nur noch eine Faser in die Führungshülse einmündet (Einleitertechnik).
Bei beiden beschriebenen Einleiter/Zweileiter-Techniken besitzt der Sendespiegel 10 zumindest eine mit der Oberseite die Faser 4 abschließende Höhe, um bei einer Neigung der Spiegelfläche von 45° insbesondere einen entlang der Faserachse in die Sendefaser eingespeisten Lichtstrahl vollständig zu übertragen.
Wie in Fig. 2b für die Sendeeinheit dargestellt, kann für außerhalb der Faserachse eingespeiste Lichtstrahlen, die Spiegelhöhe und Neigung in Abhängigkeit vom Eintrittswinkel in einem vom Strahlenverlauf vorgegebenen Bereich variabel gewählt werden.
Diese Vorgehensweise bildet die Basis einer Anordnung von Faser, Sender und Empfänger hintereinander in einer entlang der Faserachse verlaufenden und zur Trägerplatte senkrecht stehenden Ebene. Die Anordnung enthält nur noch eine kombinierte Sende/Empfangsfaser, wobei auf ein zusätzliches Y-Koppelelement verzichtet werden kann. Einige Ausführungsformen sind in Fig. 3 dargestellt. Der Querschnitt in Fig. 3a zeigt den unterhalb des Senders 2 angeordneten Auskoppelspiegel 10, der lediglich einen gewissen Teil des Lichts abschattet, das aus der Sende/Empfangs-Faser 12 auf den Auskoppelspiegel 11 trifft, um im Detektor 3 registiert zu werden. Bei möglichst flacher Neigung des Auskoppelspiegels kann dadurch ein beträchtlicher Intensitätsgewinn des auszuwertenden Signals im Detektor erzielt werden. Eine weitere Steigerung ist von der in Fig. 3b dargestellten Anordnung zu erwarten, bei der auf einen Auskoppelspiegel ganz verzichtet werden kann, indem der Detektor 3 direkt im Strahlengang des aus der Sende/Empfangsfaser austretenden Signals angebracht ist und damit gewisse Intensitätsverluste beim Umlenken vermieden werden. In gleicher Weise können auch gehäuste Bauteile in die Anordnung integriert werden. Die Aufnahme 8 für ein TO-Gehäuse ist wie in allen vorherigen Beispielen mittels Prägetechnik einfach und präzise herstellbar.

## Patentansprüche

1. Optisches Sende/Empfangsmodul insbesondere für Einleitertechnik, bestehend aus einer spiegelnd beschichteten, opaken Trägerplatte (1), optischen Sende-/Empfangsfaser(n) (12), einem Sender (2) als Laserdiode und einem Empfänger (3), **dadurch gekennzeichnet,**
- **dass** auf der Trägerplatte (1) eine in die spiegelnd beschichtete Oberfläche eingebrachte Nut in der die Sende/Empfangsfaser (12) angeordnet ist,
- **dass** in Verlängerung der Nut ein Einkoppelspiegel (10) eingeprägt ist, der das Faserende nur teilweise abschattet und dessen Neigung in Abhängigkeit von der Modenauswahl unter einem definierten Winkel zur maximalen Einkopplung des Lichts festgelegt ist,
- **dass** in weiterer Verlängerung der Nut ein Auskoppelspiegel (11) eingeprägt ist, der das Faserende vollständig abschattet, und
- **dass** der optische Sender (2) und Empfänger (3) direkt über den Spiegeln angebracht sind (Fig 3a).

2. Optisches Sende/Empfangsmodul insbesondere für Einleitertechnik, bestehend aus einer spiegelnd beschichteten, opaken Trägerplatte (1), optischen Sende-/Empfangsfaser(n) (12), einem Sender (2) als Laserdiode und einem Empfänger (3), **dadurch gekennzeichnet,**
- **dass** auf der Trägerplatte (1) eine in die spiegelnd beschichtete Oberfläche eingebrachte Nut in der die Sende/Empfangsfaser (12) angeordnet ist,
- **dass** in Verlängerung der Nut ein Einkoppelspiegel (10) eingeprägt ist, der das Faserende nur teilweise abschattet und dessen Neigung in Abhängigkeit von der Modenauswahl unter einem definierten Winkel zur maximalen Einkopplung des Lichts festgelegt ist,
- **dass** ein optischer Sender (2) direkt über dem Einkoppelspiegel (10) angeordnet ist, und
- **dass** in weiterer Verlängerung zur Faser (12) ein optischer Empfänger (3) direkt hinter dem Einkoppelspiegel (10) angebracht ist (Fig. 3b).

3. Optisches Sende/Empfangsmodul nach Anspruch 1 oder 2, **dadurch gekennzeichnet**, daf die Trägerplatte aus Metall oder Kunststoff besteht.

4. Optisches Sende/Empfangsmodul nach einem der Ansprüche 1 bis 3, **dadurch gekennzeichnet, daß** die optischen Sende-/Empfangsfaser(n) aus zylindrischen Mehrmodenlichtwellenleitern aus Glas oder Polymeren mit Kerndurchmesser von mindestens 50µm bestehen.

5. Optisches Sende/Empfangsmodul nach einem der vorhergehende Ansprüche, **dadurch gekennzeichnet, daß** der optische Sender (2) und/oder Empfänger (3) gehäust vorliegen (3c).

## Claims

1. Optical transmitting/receiving module, in particular for single-conductor technology, comprising a specularly coated, opaque support plate (1), optical transmitting/receiving fibre(s) (12), a transmitter (2) as a laser diode and a receiver (3), **characterized**
- **in that** a groove which has been made into the specularly coated surface and in which the transmitting/receiving fibre (12) lies is arranged on the support plate (1),
- **in that** impressed as an extension of the groove is a coupling-in mirror (10), which only partially occludes the fibre end and the inclination of which is fixed in dependence on the mode selection at a defined angle for the maximum coupling in of the light,
- **in that** impressed as a further extension of the groove is a coupling-out mirror (11), which completely occludes the fibre end, and
- **in that** the optical transmitter (2) and receiver (3) are attached directly above the mirrors (Figure 3a).

2. Optical transmitting/receiving module, in particular for single-conductor technology, comprising a specularly coated, opaque support plate (1), optical transmitting/receiving fibre(s) (12), a transmitter (2) as a laser diode and a receiver (3), **characterized**
- **in that** a groove which has been made into the specularly coated surface and in which the transmitting/receiving fibre (12) lies is arranged on the support plate (1),
- **in that** impressed as an extension of the groove is a coupling-in mirror (10), which only partially occludes the fibre end and the inclination of which is fixed in dependence on the mode selection at a defined angle for the maximum coupling in of the light,
- **in that** an optical transmitter (2) is arranged directly above the coupling-in mirror (10), and
- **in that** as a further extension of the fibre (12) an optical receiver (3) is attached directly behind the coupling-in mirror (10) (Figure 3b).

3. Optical transmitting/receiving module according to Claim 1 or 2, **characterized in that** the support plate consists of metal or plastic.

4. Optical transmitting/receiving module according to one of Claims 1 to 3, **characterized in that** the optical transmitting/receiving fibre(s) comprise cylindrical multimode optical fibres made of glass or polymers with a core diameter of at least 50 µm.

5. Optical transmitting/receiving module according to one of the preceding claims, **characterized in that** the optical transmitter (2) and/or receiver (3) are in a housed form (3c).

## Revendications

1. Module optique d'émission/réception, notamment pour la technique unifilaire, composé d'une plaque support opaque (1) à revêtement réfléchissant, de fibre(s) optique(s) d'émission/réception (12), d'un émetteur (2) sous la forme d'une diode laser et d'un récepteur (3), **caractérisé en ce que**
- une rainure intégrée dans la surface à revêtement réfléchissant, dans laquelle se trouve la fibre d'émission/réception (12), est disposée sur la plaque support (1),
- un miroir d'entrée (10) est incrusté dans la prolongation de la rainure, lequel ne masque que partiellement l'extrémité de la fibre et dont l'inclinaison est déterminée en fonction de la sélection du mode sous un angle défini par rapport à l'entrée maximale de la lumière,
- un miroir de sortie (11) est incrusté dans une autre prolongation de la rainure, lequel masque complètement l'extrémité de la fibre, et
- l'émetteur optique (2) et le récepteur (3) sont disposés directement au-dessus des miroirs (figure 3a).

2. Module optique d'émission/réception, notamment pour la technique unifilaire, composé d'une plaque support opaque (1) à revêtement réfléchissant, de fibre(s) optique(s) d'émission/réception (12), d'un émetteur (2) sous la forme d'une diode laser et d'un récepteur (3), **caractérisé en ce que**
- une rainure intégrée dans la surface à revêtement réfléchissant, dans laquelle se trouve la fibre d'émission/réception (12), est disposée sur la plaque support (1),
- un miroir d'entrée (10) est incrusté dans la prolongation de la rainure, lequel ne masque que partiellement l'extrémité de la fibre et dont l'inclinaison est déterminée en fonction de la sélection du mode sous un angle défini par rapport à l'entrée maximale de la lumière,
- un émetteur optique (2) est disposé directement au-dessus du miroir d'entrée (10), et
- un récepteur optique (3) est disposé directement derrière le miroir d'entrée (10) dans une autre prolongation vers la fibre (12) (figure 3b).

3. Module optique d'émission/réception selon la revendication 1 ou 2, **caractérisé en ce que** la plaque support est en métal ou en plastique.

4. Module optique d'émission/réception selon l'une des revendications 1 à 3, **caractérisé en ce que** la ou les fibres optiques d'émission/réception se composent de fibres optiques multimodales cylindriques en verre ou en polymère dont l'âme a un diamètre minimum de 50 µm.

5. Module optique d'émission/réception selon l'une des revendications précédentes, **caractérisé en ce que** l'émetteur optique (2) et/ou le récepteur optique (3) se trouvent dans un boîtier (figure 3c).
